## Europäisches Patentamt

(19) **European Patent Office**

**Office européen des brevets**

(11) Publication number: **0 115 178**
**B1**

(12) **EUROPEAN PATENT SPECIFICATION**

(45) Date of publication of patent specification: **28.02.90**

(51) Int. Cl.⁵: **G 05 B 15/02**

(21) Application number: **83307835.5**

(22) Date of filing: **21.12.83**

(54) Digital controller.

(30) Priority: **23.12.82 JP 232526/82**

(43) Date of publication of application:
**08.08.84 Bulletin 84/32**

(45) Publication of the grant of the patent:
**28.02.90 Bulletin 90/09**

(84) Designated Contracting States:
**DE FR GB**

(56) References cited:
**US-A-4 118 772**
**US-A-4 180 860**
**US-A-4 189 765**

**ADVANCES IN INSTRUMENTATION, vol. 37,
part 2, October 1982, pages 617-626, ISA,
Research triangle Park, N.C., US; K. TAKADA et
al.: "Microprocessor based distributed control"**

(73) Proprietor: **KABUSHIKI KAISHA TOSHIBA
72, Horikawa-cho Saiwai-ku
Kawasaki-shi Kanagawa-ken 210 (JP)**

(72) Inventor: **Takada, Keisuke c/o Patent Division
TOKYO SHIBAURA DENKI K.K. 72 Horikawa-cho
Saiwai-ku Kawasaki-shi Kanagawa-ken (JP)**
Inventor: **Mizutani, Masamichi c/o Patent
Division
TOKYO SHIBAURA DENKI K.K. 72 Horikawa-cho
Saiwai-ku Kawasaki-shi Kanagawa-ken (JP)**

(74) Representative: **Shindler, Nigel et al
BATCHELLOR, KIRK & EYLES 2 Pear Tree Court
Farringdon Road
London EC1R 0DS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a controller for process control and more particularly to such a digital controller equipped with an electronic indicator.

A digital controller is an electronic control instrument which includes a microprocessor for direct digital control (DDC) applications. Such a digital controller has an indicating and operating portion and a control portion with a microprocessor or microprocessors.

Some of the conventional digital controllers of this kind have a moving coil type indicator, while others have an electronic indicator. One example of a controller equipped with a moving coil type indicator is shown in Figure 2 of U.S. Patent No. 4,118,772. Recently there have been so-called single loop controllers which are housed in a single housing similar to a conventional analogue controller as described at pages 21—27 of the Toshiba Review No. 127, May—June 1980. In this digital controller, the input terminal of the operation output indicating portion is placed at the stage following the back-up manual control means, and therefore should the microprocessor fail, it is possible to control the controller manually while watching the operation output indicating portion. However, since moving coil type indicators are inferior to electronic indicators in performance including their resistance to vibration, readability and accuracy, digital controllers have recently increasingly used electronic indicators, such as light-emitting diode arrays and phosphor indicator tubes.

However, when the operation output indicating portion has an electronic indicator, it has not been possible to read the output value when the microprocessor fails and the controller is switched to back-up manual control operation. For this reason, it is customary to use only a moving coil type indicator for the operation output indicating portion, as described in U.S. Patent No. 4,189,765. If an electronic indicator were to be used, a very expensive interface circuit would be necessary in order to read the output value after failure of the microprocessor.

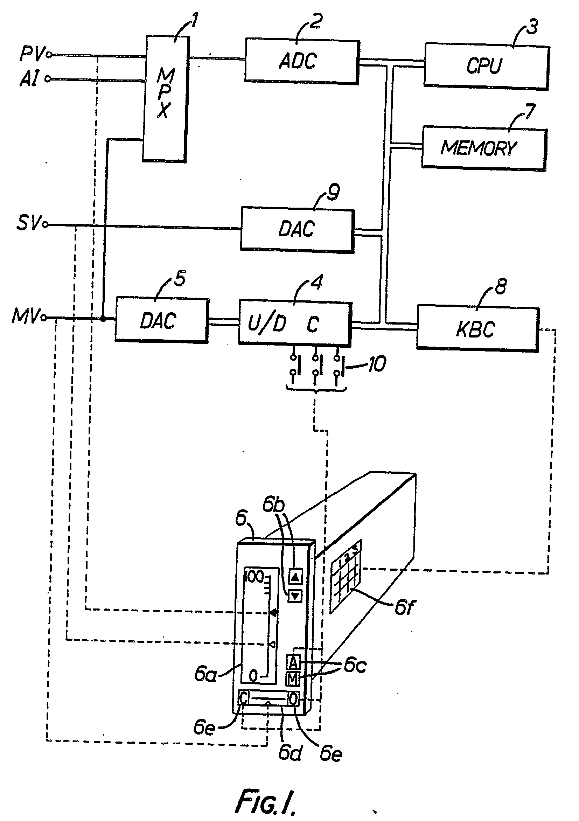

Figure 1 shows a digital controller equipped with a conventional moving coil type indicator. This controller has a multiplexer 1 for selectively accepting a signal indicating a process variable PV and other analogue signals AI. The accepted signals are then converted into digital form by an analogue-to-digital converter circuit 2 and supplied to a microprocessor 3, which under program control performs PID (proportional plus integral plus derivative) operations in response to the process variable PV to determine a manipulated variable MV such that the process variable PV may coincide with a desired setpoint variable SV. The MV is fed via an up/down counter 4 to a digital-to-analogue converter circuit 5, where the digital signals are converted into analogue form. This analogue signal is then furnished to a final control element (not shown) to operate it.

The controller further includes a moving coil type indicator portion 6, the front of which is provided with an indicating panel 6a for indicating the process variable PV and the setpoint variable SV, push buttons 6b for changing the value of the setpoint variable, switches 6c for selecting automatic and manual control modes, a manipulated variable MV indicating panel 6d, and up/down switches 6e. Equipped on the side is a keyboard 6f having a digital display unit. An operator can increase and decrease the count in the counter 4 independently of the microprocessor 3 by operating the switches 6c and 6e. The controller has also a memory 7 such as a ROM or RAM, and a keyboard circuit 8 which stores PID parameters and the upper and lower limits of an alarm in memory 7 or displays them on the keyboard 6f. 9 is a digital-to-analog converter circuit.

In the digital controller constructed as thus far described, should the microprocessor 3 fail, it is possible to increment or decrement the up/down counter 4 through the action of a switch circuit 10 by operating the control mode switches 6c and up/down switches 6e. Also, the current value of MV can be seen on panel 6d, while manual control is performed.

Since moving coil type indicators are inferior in performance to electronic indicators as noted before, digital controllers have recently increasingly adopted electronic indicators, for example as shown in "Advances in Instrumentation" Vol. 37 (1982) Oct. P617—626. However, when only an electronic indicator is used for the control output indicating portion without changing other portions, it is not possible to read the manipulated variable when the microprocessor fails, even if the controller is switched to manual control operation.

It is an object of the present invention to provide a digital controller which is equipped with an electronic indicator.

Accordingly the present invention provides a digital controller comprising a microprocessor for determining a manipulated variable by arithmetic operation in accordance with a predetermined algorithm to cause a process variable signal (PV) received by the microprocessor to follow a set point variable, an output system for delivering a signal in accordance with the manipulated variable (MV) for controlling the process, the output system including holding means for the manipulated variable and electronic indicating means for displaying the process variable (PV), the set point variable (SV) and the manipulated variable (MV), characterised in that the output from the holding means is supplied to a pulse modulation circuit whose output is in turn supplied to a converter circuit which provides an analogue signal corresponding to the manipulated variable as said signal for controlling the process; and an electronic indicator means driver circuit which is adapted to provide a drive signal for the electronic indicator means in accordance with the output of the pulse modulation circuit.

The invention will be more readily understood by way of example from the following description of a digital controller in accordance therewith, reference being made to the accompanying drawings, in which:

Figure 1 is a block diagram of the digital controller equipped with a conventional moving coil type indicator;

Figure 2 is a block diagram of the digital controller;

Figure 3 is a view specifically showing the construction of the bar graph driver and the bar graph display circuits of the digital controller shown in Figure 2;

Figure 4 is a block diagram of the scanning control circuit;

Figure 5 is a timing chart for the scanning control circuit of Figure 4;

Figure 6 is a diagram for illustrating the operation of the pulse-duration modulation circuit of the digital controller shown in Figure 2;

Figure 7 is a diagram illustrating the operation of the bar graph driver circuit of the digital controller shown in Figure 2; and

Figure 8 shows a modification of the digital controller of Figure 2.

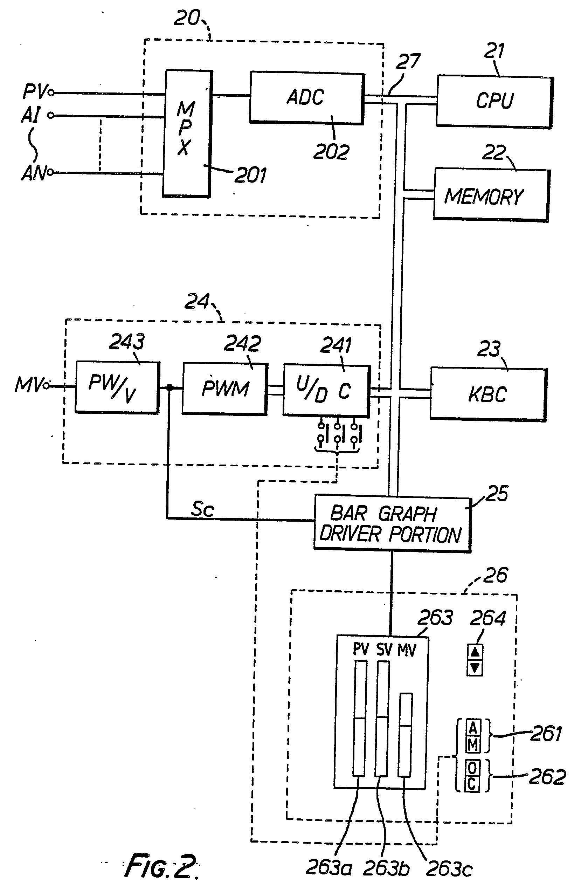

Figure 2 shows a digital controller equipped with an electronic indicator, which, in this illustrative example, makes use of bar graph representation. This controller includes a data input system 20 for receiving a signal indicating a process variable PV and other analogue signals AI-AN, a microprocessor 21, a memory 22, a keyboard circuit 23, an operation data output system 24, a bar graph driver circuit 25, and the electronic indicator 26. Those components are connected together by means of a bus 27.

The data input system 20 has a multiplexer 201 for selectively accepting the signal indicating the process variable PV to be controlled and other necessary analogue signals AI-AN under the instruction of the microprocessor 21, and an analogue-to-digital converter circuit 202 for converting the signals accepted by the multiplexer 201 into digital form and feeding the digitised signals to the microprocessor 21. The microprocessor 21 fetches a desired setpoint variable SV from the memory 22 and performs proportional integral derivative (PID) calculations, for example, to find a manipulated variable necessary for the process variable PV applied from the A/D converter 202 to be brought into coincidence with the setpoint variable SV. The manipulated variable is then delivered to the operation data output system 24.

Memory 22 includes a ROM for storing predetermined values such as the setpoint variable SV and parameters necessary for arithmetic operations in the microprocessor 21, and a RAM for holding renewal data entered therein successively. The keyboard circuit 23 acts to input the PID parameters for arithmetical operations, the upper and lower limits of an alarm, etc. in the memory 22 and to display those values on a digital display unit (not shown).

The operation data output system 24 has an up/down counter 241 in which the MV determined by the microprocessor 21 is stored in advance, a pulse-duration modulation circuit 242 for producing signals Sc, the pulse duration of which is modulated within a fixed period (variable mark/space ratio) according to the output value from the counter 241, and a pulse duration-to-voltage converter circuit 243 for converting the modulated signals Sc into an analogue voltage signal. The output signal from the converter circuit 243 is used to control a final control element (not shown) which adjusts the process variable. An operator can manually operate automatic/manual control mode switches 261 and up/down switches 262 to increment or decrement the counter 241 independently of the microprocessor 21.

The bar graph driver circuit 25 receives the modulated signals Sc from the modulation circuit 242, fetches the data on the process variable and setpoint variable from the microprocessor, and delivers the data to the electronic indicator 26. The indicator 26 has a bar graph display portion 263 which includes bar graphs 263a, 263b, 263c for the process variable, the desired setpoint variable and a manipulated variable, respectively. The indicator 26 further includes push buttons 264 for changing the setpoint variable value, the automatic/manual control mode switches 261, and the up/down switches 262.

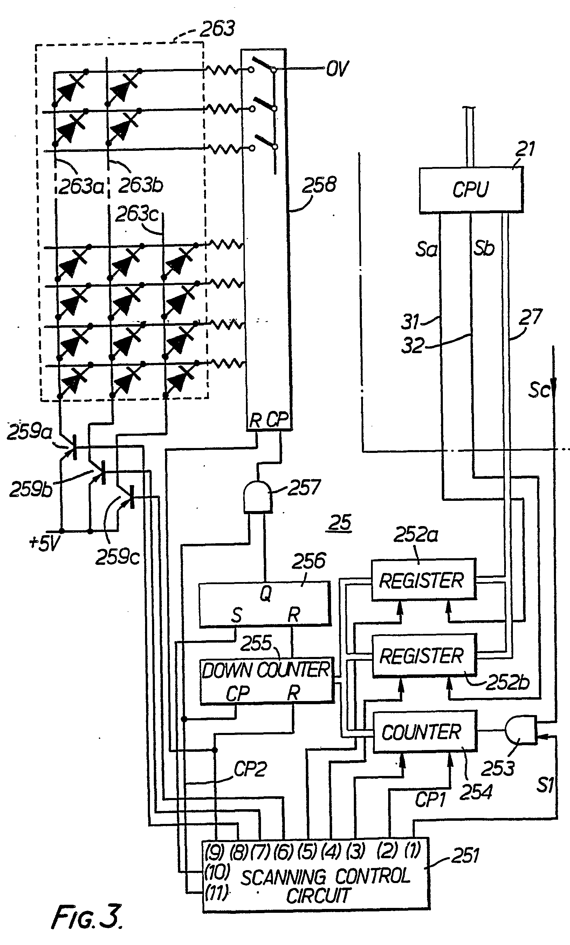

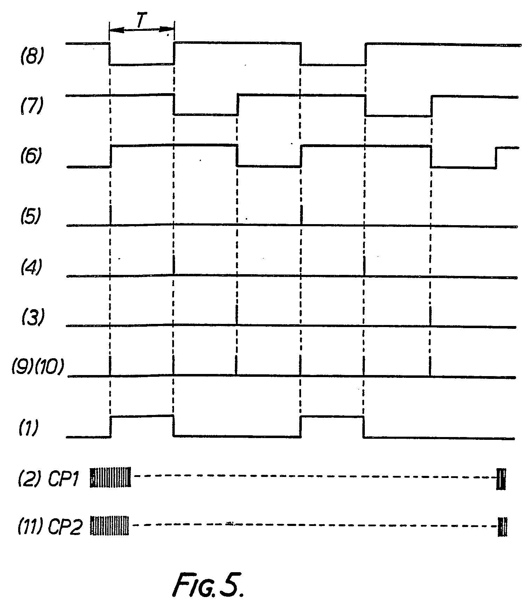

The bar graph driver circuit 25 and the bar graph display circuit 263 are shown in detail in Figure 3. The driver circuit 25 includes a scanning control circuit 251, a process variable register 252a, a setpoint variable register 252b, an AND gate 253, and an operation output value counter 254. The registers 252a and 252b store the process variable and the setpoint variable data on bus 27 in response to select signals Sa and Sb which are fed from the microprocessor 21 through control lines 31 and 32 respectively. AND gate 253 produces an output signal which is the AND of the pulse modulated signals Sc and a signal S1 from the control circuit 251 (signal (1) in Figure 5) which has the same period as the fixed cycle period of the modulation circuit 242. Counter 254 counts the clock pulses CP1 delivered by the control circuit 251 (signal (2) in Figure 5), during the period of the output signal from the AND gate 253.

A down counter 255 first stores the data from the register 252a or 252b or the counter 254 selected by the control circuit 251, and then decreases its preset value in response to clock signals CP2 from circuit 251 (signals (11) in Figure 5). Flip-flop 256 is set by a set signal from the control circuit 251 (signal (10) in Figure 5) and reset when the count in the counter 255 falls to zero. An AND gate 257 delivers output signals in succession in response to the clock signal CP2 from the control circuit 251 while it is supplied with a signal from flip-flop 256. A shift register 258 whose contents are successively shifted in response to the signals from AND gate 257 gives selective drive signals to the horizontal bars of the bar graph display circuit 263. Selective drive circuits 259a—259c furnish selective drive signals to the vertical bars of the display portion 263 in response to the selective signals from the control circuit 251. The display circuit 263 has a plurality of vertical bars and a plurality of horizontal bars arranged in a matrix form. Light-emitting diodes are connected at the intersections of the bars.

In the operation of the digital controller, the multiplexer 201 samples the signal indicating the value PV obtained by a process measurement for example, and other analogue signals AI-AN in succession in accordance with the instructions from the microprocessor 21. The sampled data are supplied to the A/D converter circuit 202, which converts the analogue signal from the multiplexer 201 into digital from and then feeds the resultant digital signals to the microprocessor 21. The microprocessor 21 reads the setpoint variable SV from the memory 22 and performs PID operations according to a stored algorithm to determine a manipulated variable MV which will bring the process variable PV to the value of the setpoint variable SV. Next, the microprocessor 21 writes the process variable PV and manipulated variable MV into memory 22 and supplies select signals to the registers 252a, 252b of the bar graph drive portion 25 through the control lines 31, 32 to cause the process variable PV and setpoint variable SV to be entered into registers 252a and 252b, respectively. The derived manipulated variable MV is loaded into the up/down counter 241 of the output system 24 in advance, and the total count of the counter is fed to the pulse-duration modulation circuit 242, which produces signals Sc whose pulse duration is modulated within a fixed period T according to the output value from the counter 241. The modulated signals are then furnished to AND gate 253 and the pulse duration-to-voltage converter circuit 243. The converter circuit 243 converts its input signal into an analogue voltage corresponding to the pulse duration and then supplied it to the final control element for controlling the process variable.

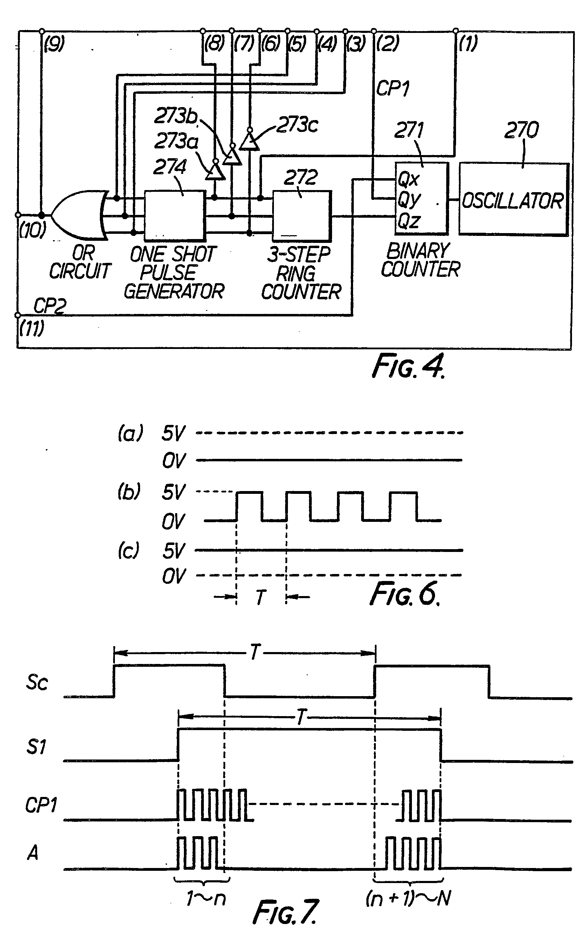

Figure 4 is a block diagram of the scanning control circuit 251. A conventional oscillator 270 generates pulse signals which are applied to binary counter 271. Counter 271 has three output signals from its output terminals Qx, Qy, and Qz. A clock signal Cp2 is generated at terminal Qx and applied to output terminal (11) of circuit 251. A second clock signal Cp1 is generated at terminal Qy and applied to output terminal (2) of circuit 251. The frequency of the signal at terminal Qx is higher than the frequency of the signal at terminal Qy, and the frequency of the signal at the terminal Qy is higher than that at the terminal Qz. The signal from terminal Qz is applied to a three step ring counter 272.

Ring counter 272 outputs three sequential pulse signals of the same period and frequency but displaced in time, and those pulse signals are applied to inverters 273a, 273b, and 273c to form signals (6), (7) and (8) respectively. The selective drive circuits 259a—259c are operated by the signals (6), (7) and (8). A one shot pulse generator 274 receives all three output signals from ring counter 272 and outputs '1' level one shot pulse signals applied to output terminals (3), (4) and (5) when its input signals goes from a 'zero' level to a '1' level. The three outputs from generator 274 are applied to an OR circuit which provides outputs (9) and (10).

Figure 5 is a timing chart for the respective output signals of the scanning control circuit 251 described above.

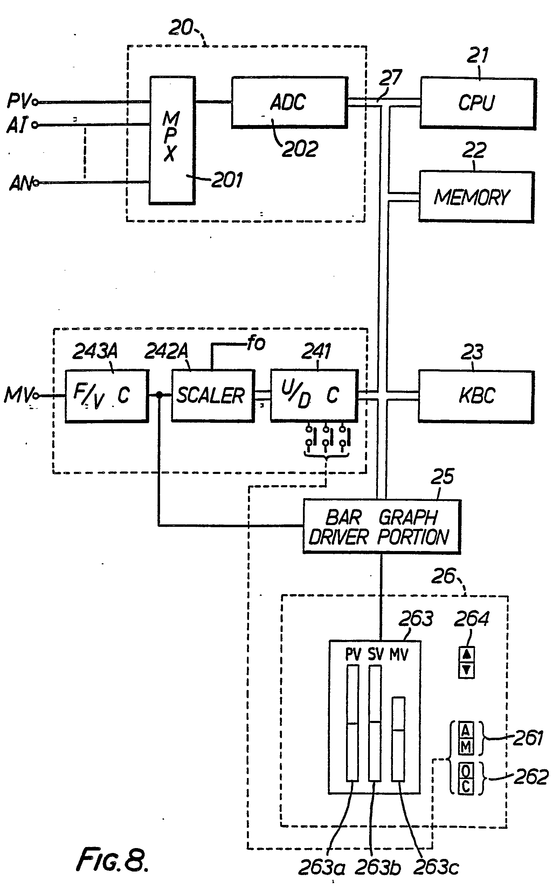

Figure 6 shows at (a), (b) and (c) the output signals Sc from the pulse-duration modulation circuit 242 are shown, when the output is 0%, 50% and 100% of its maximum level, respectively. When it is 50%, the ratio of the durations in which 5V condition (logic high level) and 0V condition (logic low level) are maintained, respectively, are 1:1 (50%:50%) for the fixed period T; generally the ratio varies linearly with the output level from 0:1 to 1:0.

The modulated signals Sc obtained in this way are fed to AND gate 253, the other input terminal of which is supplied from output (1) of circuit 251 with the select signal $S_1$ having a pulse length each to the period T of the modulation circuit 242 as shown in Figure 7. At the same time, control circuit 251 delivers clock signal CP1 the period of which is T/100, for example. Thus, counter 254 counts upward the clocks CP1 only when both the modulated signals Sc and the select signals $S_1$ are at the high '1' level and produces a signal in accordance with the manipulated variable value MV.

Figure 7 shows at A the manner in which the counter 254 increments the count in the counter. Specifically, the counter 254 reaches the count of n when the signals Sc and $S_1$ are initially ANDed, and the count increases from n to N when they are next ANDed. It is to be noted that Figures 3 and 7 show the case where the modulated signals Sc and the select signals $S_1$ are asynchronous. However, it is also possible to synchronise these signals with each other.

After the process variable PV and the setpoint variable SV are loaded into the registers 252a and 252b, respectively, and the manipulated variable MV is counted into the counter 254, the control circuit 251 selects in turn the combination of the register 252a and the selective drive circuit 259a, the combination of register 252b and the selective drive circuit 259b, and the combination of counter 254 and the selective drive circuit 259c, in a time sharing manner using the select signal. As an example, when the register 252a for the process variable is selected, the contents are loaded in the down counter 255. Thereafter, clock signals CP2 delivered by control circuit 251 are fed to the counter 255 and the AND gate 257. The counter 255 is decremented at each clock pulse CP2, and, when the count falls to zero counter 255 resets the flip-flop 256. Prior to counter 255 reaching zero, AND gate 257 delivers clock pulses CP2 to shift register 258 successively, but, when flip-flop 256 is reset, the flow of pulses ceases. Shift register 258 applies a select drive signal to successive horizontal bars of the display circuit 253 each time it receives a signal from AND gate 257. As a result, a number of light-emitting diodes of the measured value bar graph 263a corresponding to the process variable PV are illuminated. The setpoint variable SV and the manipulated variable MV are similarly displayed by bar graphs 263b and 263c.

In the foregoing description, it is assumed that the output signal from the modulation circuit 242 takes the form shown in Figure 6. However, when the modulation circuit 242 produces output signals proportional to the count of 0 to 1000, for example, of the counter 254 and the manipulated variable MV is converted into a voltage of 0—5 V by the converter circuit 243, 1—5 V of the manipulated variable MV provides an indication of 0 to 100% in instrumentation control applications where a digital controller is usually employed. However if the counter 254 counts the signals Sc shown in Figure 7 as it is, a surplus count corresponding to 1 V is added. For this reason, it is customary to reduce the voltage by 1 V when the counter 254 effects a counting operation. This is realised by inserting appropriate logic between the counter 254 and the down counter 255, into which data are loaded from the counter 254, to reduce the voltage by 1 V.

It is to be understood that the present invention is not limited to the foregoing embodiment. For example, the pulse-duration modulation circuit 242 and the pulse duration-to-voltage converter circuit 243 on the output side of the up/down counter 241 as shown in Figure 3 may be replaced with equal utility by a pulse frequency scaler 242a, which produces a frequency of 0 to $f_0$ in response to variations in the operation output from 0 to 100%, and a frequency-to-voltage converter circuit 243a for converting the output frequency from the scaler 242a into an analogue voltage as shown in Figure 8. It is also possible to employ a display having only two bar graphs; in that case, the process variable PV and the setpoint variable SV may be alternatively displayed on one bar graph, being selected manually for example, and the manipulated variable MV on the other bar graph.

The manipulated variable MV obtained by arithmetic operations in the microprocessor is written into the counter 254 and then displayed. Should the microprocessor fail, the manipulated variable can be increased and decreased manually, so as to effect process control manually. Since the output from the up/down counter 241 in which the manipulated variable is first loaded is converted to pulse form, the addition of only simple circuits to the conventional bar graph driver circuit is necessary. Thus, the hardware structure for the controller is relatively simple, and conversion to manual control is readily performed.

## Claims

1. A digital controller comprising a microprocessor (21) for determining a manipulated variable by arithmetic operation in accordance with a predetermined algorithm to cause a process variable signal (PV) received by the microprocessor to follow a set point variable, an output system (24) for delivering a signal in accordance with the manipulated variable (MV) for controlling the process, the output system including holding means (241) for the manipulated variable and electronic indicating means (26) for displaying the process variable (PV), the set point variable (SV) and the manipulated variable (MV), characterised in that the output from the holding means (241) is supplied to a pulse modulation circuit (242) whose output is in turn supplied to a converter circuit (243) which provides an analogue signal corresponding to the manipulated variable as said signal for controlling the process; and an electronic indicator means driver circuit (25) which is adapted to provide a drive signal for the electronic indicator means (26) in accordance with the output of the pulse modulation circuit (242).

2. A digital controller according to claim 1 in which the pulse modulation circuit produces a pulse-width modulated signal and the converter is a pulse duration to voltage converter.

3. A digital controller according to claim 1 in which the pulse modulation circuit produces a frequency modulated signal and the converter is a frequency-to-voltage converter.

4. A digital controller according to any of claims 1 to 3 in which the output system further comprises means for varying the contents of the holding means under manual control in the event of failure of the microprocessor, thereby enabling manual control of the process and simultaneous display of the manually controlled manipulated variable.

5. A digital controller according to claim 1, in which the driver circuit (25) has two registers (252a, 252b), means (27) for entering in the respective registers values of the process variable (PV) and setpoint variables (SV), and a counter (254) for receiving the manipulated variable (MV) from the holding means (241) of the output system (24).

6. A digital controller according to claim 5, in which the input means include a source of clock pulses (270, 271) and gating means (253) for applying the clock pulses to the counter under control of the pulses.

7. A digital controller according to any one of the preceding claims, in which the electronic indicating means (26) include bar graph display devices (263a—263c) under the control of the driver circuit (25).

8. A digital controller according to any one of the preceding claims, in which the holding means is a counter (241) connected to the microprocessor (21) to receive a count corresponding to the determined manipulated variable.

## Patentansprüche

1. Digitale Steuereinrichtung mit einem Mikroprozessor (21) zur Bestimmung einer manipulierten Variablen durch arithmetische Operation entsprechend einem vorbestimmten Algorithmus, um zu bewirken, daß ein vom Mikroprozessor empfangenes Prozeßvariable-Signal (PV) einer Sollwertvariablen folgt, mit einem Ausgabesystem (24) zur Abgabe eines Signales entsprechend der manipulierten Variablen (MV) zur Steuerung des Prozesses, wobei das Ausgabesystem Haltemittel (241) für die manipulierte Variable und eine elektronische Anzeigeeinrichtung (26) zur Wiedergabe der Prozeßvariablen (PV), der Sollwertvariablen (SV) und der manipulierten Variablen (MV) aufweist, dadurch gekennzeichnet, daß das Ausgangssignal der Haltemittel (241) einem Pulsmodulationskreis (242) zugeführt wird, dessen Ausgangssignal wiederum einem Konverterkreis (243) zugeführt wird, der ein der manipulierten Variablen entsprechendes Analogsignal als das Signal zur Steuerung des Prozesses erzeugt, und daß ein Treiberkreis (25) für die elektronische Anzeigeeinrichtung vorgesehen ist, der ein Steuersignal für die Anzeigeeinrichtung (26) entsprechend dem Ausgangssignal des Pulsmodulationskreises (242) erzeugt.

2. Digitale Steuereinrichtung nach Anspruch 1, bei der der Pulsmodulationskreis ein impulsbreitenmoduliertes Signal erzeugt und der Konverter ein Impulsdauer/Spannungs-Konverter ist.

3. Digitale Steuereinrichtung nach Anspruch 1, bei der der Pulsmodulationskreis ein frequenzmoduliertes Signal erzeugt und der Konverter ein Frequenz/Spannungskonverter ist.

4. Digitale Steuereinrichtung nach einem der Ansprüche 1 bis 3, bei der das Ausgabesystem ferner eine Einrichtung zur Änderung der Inhalte der Haltemittel unter manueller Steuerung bei Ausfall des Mikroprozessors aufweist, wodurch eine manuelle Steuerung des Prozesses und eine gleichzeitige Wiedergabe der manuell gesteuerten manipulierten Variablen ermöglicht wird.

5. Digitale Steuereinrichtung nach Anspruch 1, bei der der Treiberkreis (25) zwei Register (252a, 252b), eine Einrichtung (27) zum Eingeben von Werten der Prozeßvariablen (PV) und der Sollwertvariablen (SV) in die entsprechenden Register sowie einen Zähler (254) aufweist zum Empfangen der manipulierten Variablen (MV) von den Haltemitteln (241) des Ausgabesystems (24).

6. Digitale Steuereinrichtung nach Anspruch 5, bei der die Eingabemittel eine Taktimpulsquelle (270, 271) und eine Torschaltung (253) zum Zuführen der Taktimpulse zum Zähler unter Steuerung der Impulse aufweist.

7. Digitale Steuereinrichtung nach einem der vorhergehenden Ansprüche, bei der die elektronische Anzeigeeinrichtung (26) Balkendiagramm-Wiedergabegeräte (263a—263c) unter Steuerung des Treiberkreises (25) aufweist.

8. Digitale Steuereinrichtung nach einem der vorhergehenden Ansprüche, bei der das Haltemittel ein Zähler (241) ist, der an den Mikroprozessor (21) angeschlossen ist, um einen Zählwert zu erhalten entsprechend der bestimmten manipulierten Variablen.

## Revendications

1. Dispositif de commande numérique qui comprend un microprocesseur pour déterminer une variable manipulée par une opération arithmétique conformément à un algorithme prédéterminé afin de faire en sorte qu'un signal de processus variable (PV) reçu par le microprocesseur suive une variable de point de réglage, un système de sortie pour délivrer un signal conforme à la variable manipulée (MV) pour commander le processus, le système de sortie incluant des moyens (241) pour conserver la variable manipulée et des moyens indicateurs électroniques (26) pour afficher la variable de processus (PV) la variable de point de réglage (SV) et la variable manipulée (MV), caractérisé en ce que les signaux de sortie des moyens de conservation (241) sont fournis à un circuit de modulation d'impulsions (242) dont les signaux de sortie sont, à leur tour, appliqués à un circuit convertisseur (243) qui produit un signal analogique correspondant à la variable manipulée en tant que signal pour commander le processus; et un circuit électronique (25) qui est adapté à produire un signal pour activer des moyens indicateurs électroniques (26) conformément aux signaux de sortie dudit circuit de modulation d'impulsions (242).

2. Dispositif de commande numérique selon la revendication 1, caractérisé en ce que le circuit de modulation d'impulsions produit un signal modulé en largeur d'impulsions, tandis que le circuit convertisseur est un circuit qui convertit la durée des impulsions en une tension électrique.

3. Dispositif de commande numérique selon la revendication 1, caractérisé en ce que le circuit de modulation d'impulsions produit un signal modulé en fréquence, et en ce que le circuit convertisseur est un convertisseur de fréquence en tension électrique.

4. Dispositif de commande numérique selon l'une quelconque des revendications 1 à 3, caractérisé en ce que le système de sortie comprend, en outre, des moyens pour faire varier le contenu des moyens de maintien manuellement dans l'éventualité d'une défaillance du microprocesseur, permettant ainsi de commande le processus manuellement et de visualiser en même temps la variable manipulée commandée manuellement.

5. Dispositif de commande numérique selon la revendication 1, caractérisé en ce que le circuit d'actionnement (25) comporte deux registres (252a, 252b), des moyens pour entrer dans les registres respectivement les valeurs del a variable de processus (PV) et des variables de point de réglage (SV), et un compteur (254) pour recevoir la variable manipulée (MV) des moyens de maintien (241) du système de sortie (24).

6. Dispositif de commande numérique selon la revendication 5, caractérisé en ce que les moyens d'entrée comprennent une source d'impulsions d'horloge (270, 271) et des moyens d'aiguillage (253) pour appliquer les impulsions d'horloge au compteur sous la commande des impulsions.

7. Dispositif de commande numérique selon l'une quelconque des revendications précédentes, caractérisé en ce que les moyens indicateurs électroniques (26) comprennent des dispositifs d'affichage graphiques à barres (263a, 263c) commandés par le circuit d'actionnement (25).

8. Dispositif de commande numérique selon l'une quelconque des revendications précédentes, caractérisé en ce que les moyens de maintien sont constitués par un compteur (241) connecté au microprocesseur (21) afin de recevoir un compte correspondant à la variable manipulée déterminée.

EP 0 115 178 B1

**Fig.1.**

FIG. 2.

FIG.3.

Fig. 4.

Fig. 6.

Fig. 7.

FIG.5.

5

**FIG.8.**

EP 0 115 178 B1